# FASCICULE DE BREVET EUROPEEN

(11) **EP 3 917 895 B1**
(45) Date de publication et mention de la délivrance du brevet: **17.04.2024**
(21) Numéro de dépôt: 20707717.3
(22) Date de dépôt: 30.01.2020
(51) Int. Cl.: C03C 17/36

(54) **SUBSTRAT MUNI D'UN EMPILEMENT A PROPRIETES THERMIQUES ET A COUCHE ABSORBANTE**
SUBSTRAT MIT EINEM STAPEL MIT THERMISCHEN EIGENSCHAFTEN UND EINER ABSORBIERENDEN SCHICHT
SUBSTRATE PROVIDED WITH A STACK HAVING THERMAL PROPERTIES AND AN ABSORBENT LAYER

(30) Priorité: 30.01.2019 FR 1900878
(43) Date de publication de la demande: 08.12.2021
(73) Titulaire: Saint-Gobain Glass France, 92400 Courbevoie (FR)
(72) Inventeur: BEUTIER, Julien, 75005 PARIS (FR); RONDEAU, Véronique, 92600 Asnieres Sur Seine (FR); MARTIN, Estelle, 93200 Saint-Denis (FR); MISRA, Soumyadeep, Thiruvanmiyur Tamil Nadu, Chennai 600041 (IN)
(74) Mandataire: Saint-Gobain Recherche
(86) Numéro de dépôt international: PCT/FR2020/050150
(87) Numéro de publication internationale: WO 2020/157440

(56) Documents cités:
- EP-B1- 1 881 893
- WO-A1-2010/142926
- WO-A1-2015/155444
- WO-A1-2017/006029
- WO-A1-2018/038329
- US-A1- 2014 362 434

## Description

L'invention concerne des substrats transparents, notamment en matériau rigide minéral comme le verre (ou organique comme un substrat en polymère, rigide ou flexible), lesdits substrats étant revêtus d'un empilement de couches minces comprenant au moins une couche à comportement de type métallique pouvant agir sur le rayonnement solaire et/ou le rayonnement infrarouge de grande longueur d'onde.

L'invention concerne plus particulièrement l'utilisation de tels substrats pour fabriquer des vitrages d'isolation thermique et/ou de protection solaire. Ces vitrages sont destinés aussi bien à équiper les bâtiments que les véhicules. Ils visent notamment à diminuer l'effort de climatisation et/ou de réduire une surchauffe excessive (vitrages dits « de contrôle solaire ») et/ou diminuer la quantité d'énergie dissipée vers l'extérieur (vitrages dits « bas émissifs »).

Un type d'empilement de couches connu pour conférer aux substrats de telles propriétés est constitué d'au moins une couche métallique fonctionnelle à propriétés de réflexion dans l'infrarouge et/ou dans le rayonnement solaire, notamment une couche à base d'argent ou d'alliage métallique contenant de l'argent.

Cette couche métallique fonctionnelle se trouve disposée entre deux revêtements diélectriques comportant chacun en général plusieurs couches qui sont chacune en un matériau diélectrique, du type nitrure métallique, oxyde métallique ou oxynitrure métallique. Du point de vue optique, le but de ces revêtements qui encadrent la couche fonctionnelle métallique est « d'antirefléter » cette couche fonctionnelle métallique.

Cet empilement est généralement obtenu par une succession de dépôts effectués par une technique utilisant le vide comme la pulvérisation cathodique éventuellement assistée par champ magnétique.

Peuvent aussi être prévues deux couches métalliques très fines de part et d'autre de la couche d'argent, la couche sous-jacente en tant que couche d'accrochage, de nucléation, et la surcouche en tant que couche de protection ou " sacrificielle " afin d'éviter l'altération de l'argent si la couche d'oxyde qui la surmonte est déposée par pulvérisation cathodique en présence d'oxygène.

Ces couches métalliques ont également comme fonction de protéger la couche fonctionnelle lors d'un éventuel traitement thermique à haute température, du type bombage et/ou trempe.

Actuellement, il existe des empilements de couches minces bas-émissifs à une seule couche fonctionnelle (désignés par la suite sous l'expression « empilement monocouche fonctionnelle ») ou à deux couches fonctionnelles (désignés par la suite sous l'expression « empilement bi-couche fonctionnelle »).

Il est connu du brevet EP-0 847 965 un empilement à deux couches d'argent (« bi-couche fonctionnelle ») conçu de façon à pouvoir subir un traitement thermique de type bombage ou trempe sans évolution optique importante, grâce à l'utilisation de couches barrière à oxygène du type nitrure de silicium et de couches venant stabiliser les couches d'argent.

Il est également connu du brevet EP-0 844 219 un empilement à deux couches d'argent d'épaisseurs très différentes, permettant d'obtenir des vitrages de facteur solaire abaissé à 32% au moins. Les doubles vitrages utilisant ce type d'empilement présentent des transmissions lumineuses de l'ordre de 60 à 65%.

EP 1881 893 et WO 2010/142626 divulguent des empilements à deux couches d'argent comprenant des cocuhes absorbantes. Toutefois, ils ne divulguent pas la présence de deux couches absorbantes (A1 et A2), chaque couche absorbante étant séparée de chaque couche fonctionnelle métallique (F1 et F2) par au moins une couche en matériau diélectrique. Pour rappel, le facteur solaire (FS ou « g ») d'un vitrage est le rapport de l'énergie solaire totale entrant dans le local à travers ce vitrage sur l'énergie solaire incidente totale et la sélectivité correspond au rapport de la transmission lumineuse TLᵥᵢₛ dans le visible du vitrage sur le facteur solaire FS du vitrage et est telle que : s = TLᵥᵢₛ / FS.

Selon les climats des pays où seront installés ces vitrages, notamment, selon le niveau d'ensoleillement, les performances en termes de transmission lumineuse et de facteur solaire recherchées peuvent varier. Par conséquent, différentes gammes de vitrages, caractérisées par leur niveau de transmission lumineuse sont développées.

Par exemple, dans les pays où les niveaux d'ensoleillement sont élevés, il existe une demande forte de vitrage présentant une transmission lumineuse (TLᵥᵢₛ) de l'ordre de 25 à 45% et des valeurs de facteur solaire (FS) suffisamment basse (15-25%).

En particulier, il peut être souhaité d'obtenir des vitrages dont la TL soit faible sans que la réflexion lumineuse (RL) ne soit augmentée de manière excessive, tout en conservant la réflexion énergétique. En particulier une RL inférieure à 20% (voire inférieure à 15 %) est recherchée.

L'homme du métier sait qu'il peut introduire dans l'empilement, et plus particulièrement à l'intérieur d'un (ou de plusieurs) revêtement(s) diélectrique(s), une (ou plusieurs) couche(s) absorbante(s) dans le visible.

Il est à noter que l'art antérieur connaît déjà l'usage de couches absorbantes dans le visible dans des empilements à plusieurs couches fonctionnelles, en particulier le brevet EP 1 341 732 B1, qui porte sur l'usage de telles couches absorbantes dans le visible dans un empilement résistant à un traitement thermique du type bombage/trempe. Les couches absorbantes sont de l'ordre de 1 à 3 nm. Cet empilement vise à conférer au vitrage des hautes transmissions lumineuses, de l'ordre de 50 à 65%.

L'obtention d'une sélectivité élevée ne doit pas se faire au détriment de l'aspect esthétique et en particulier de la couleur. En général, on cherche à obtenir une esthétique la plus neutre possible, c'est-à-dire avec des indices a* et b* proches de 0 ou légèrement négatifs, en réflexion extérieure, intérieure et en transmission.

L'approche traditionnelle pour obtenir à la fois une sélectivité élevée et une excellente neutralité en couleur consiste à développer des revêtements fonctionnels de plus en plus sophistiqués.

L'adaptation de la colorimétrie de ces vitrages est obtenue en jouant sur la nature, les épaisseurs des couches ou revêtements constituant les revêtements fonctionnels métalliques et/ou diélectriques.

La complexité des revêtements rend difficile l'obtention conjointe de bonnes performances thermiques et d'une excellente neutralité en couleur.

Cette difficulté pour obtenir une excellente neutralité en couleur est encore plus marquée pour les vitrages présentant une transmission lumineuse de l'ordre de 25 à 75 % car ils sont intrinsèquement plus colorés que des vitrages présentant une transmission lumineuse plus élevée ou plus faible. En effet, pour des transmissions lumineuses très faibles ou très élevées pour lesquelles la clarté est proche de 0 ou de 100, la perception des couleurs est moins intense. Les couleurs « convergent » vers le noir et le blanc.

Enfin, la complexité de ces revêtements rend également difficile le maintien d'une qualité constante de production pour un revêtement donné. En effet, en multipliant le nombre de couches et de matériaux constituant ces revêtements, il est de plus en plus difficile d'adapter les réglages des conditions de dépôt afin d'obtenir des revêtements de couleur identique provenant de deux lots produits sur le même site de production ou de deux lots produits sur deux sites de production différents.

Il est aussi demandé que l'aspect visuel des vitrages soit quasiment inchangé quel que soit l'angle d'incidence avec lequel le vitrage est observé. Il est donc souhaitable que la couleur en réflexion, surtout du côté extérieur du vitrage, soit dans des couleurs acceptables, même lorsque l'observateur le regarde avec un angle d'incidence de 45° ou 60° par rapport à la normale. Cela signifie que l'observateur n'a pas une impression d'une inhomogénéité significative de teinte ou d'aspect, sur des immeubles de grande hauteur, en particulier.

Le but de l'invention est donc de pallier les inconvénients cités en mettant au point un vitrage présentant à la fois de bonnes performances thermiques, tout en garantissant l'aspect esthétique recherché.

En particulier, le but de l'invention est de mettre au point un nouveau type d'empilement bicouche fonctionnelle, empilement qui présente une transmission lumineuse faible et une couleur en réflexion relativement neutre.

Un autre but important est de proposer un empilement bicouche fonctionnelle qui présente une sélectivité élevée, tout en présentant une coloration appropriée, notamment en réflexion extérieure du vitrage, en particulier qui ne soit pas dans le rouge.

Un autre but de l'invention est que la couleur en réflexion, côté extérieur soit stable même lorsque l'observateur est un angle d'incidence s'écartant de la normale (perpendiculai re).

L'invention a ainsi pour objet un substrat tel que défini dans la revendication 1.

Par « revêtement » au sens de la présente invention, il faut comprendre qu'il peut y avoir une seule couche ou plusieurs couches de matériaux différents à l'intérieur du revêtement.

Comme habituellement, par « couche diélectrique » au sens de la présente invention, il faut comprendre que du point de vue de sa nature, le matériau est « non métallique », c'est-à-dire n'est pas un métal. Dans le contexte de l'invention, ce terme désigne un matériau présentant un rapport n/k égal ou supérieur à 5.

Par « couche absorbante » au sens de la présente invention, il faut comprendre que la couche est un matériau présentant un rapport n/k entre 0 et 5.

Il est rappelé que n désigne l'indice de réfraction réel du matériau à une longueur d'onde donnée et k représente la partie imaginaire de l'indice de réfraction à une longueur d'onde donnée ; le rapport n/k étant calculé à une longueur d'onde donnée identique pour n et pour k, dans la présente demande ils sont mesurés à 550 nm.

Le revêtement fonctionnel peut comporter au moins une couche absorbante dans le premier revêtement diélectrique (Di1).

Le revêtement fonctionnel peut comporter au moins une couche absorbante dans le deuxième revêtement diélectrique (Di2). La couche absorbante située dans le deuxième revêtement diélectrique (Di2) peut être entourée, et au contact, des deux côtés, de couches en matériau diélectrique choisies parmi les couches à base de nitrure du silicium et/ou d'aluminium.

De manière préférée, une première couche absorbante (A1) est disposée dans le premier revêtement diélectrique (Di1) et une deuxième couche absorbante (A2) est disposée dans le deuxième revêtement diélectrique (Di2).

Dans l'empilement du substrat revêtu selon l'invention, les deux couches absorbantes (A1 et A2) sont séparées de chaque couche fonctionnelle métallique (F1 et F2) par au moins une couche en matériau diélectrique.

Les couches absorbantes (A1, A2) sont séparées des couches fonctionnelles à base d'argent par au moins une couche diélectrique, l'épaisseur géométrique de toutes les couches diélectriques séparant chaque couche absorbante d'une couche fonctionnelle à base d'argent est supérieure à 15 nm.

Les couches absorbantes (A1, A2) peuvent être au contact d'une couche en matériau diélectrique de préférence choisie parmi les couches à base de nitrure du silicium et/ou d'aluminium.

L'épaisseur géométrique de la couche en matériau diélectrique, de préférence à base de nitrure du silicium et/ou d'aluminium, située au contact d'une couche absorbante (A1 et/ou A2) peut être :
- supérieure à 15, supérieure à 20, supérieure à 25, supérieure à 30, supérieure à 35, supérieure à 40 nm, et/ou
- inférieure à 100, inférieure à 75, inférieure à 60 nm, inférieure à 50 nm.

Lorsque l'empilement comprend une couche absorbante dans le deuxième revêtement diélectrique, cette couche absorbante peut être entourée et au contact, d'un côté ou des deux côtés, d'une couche en matériau diélectrique. De préférence, la couche en matériau diélectrique est choisie parmi les couche à base de nitrure du silicium et/ou d'aluminium. De préférence, la couche absorbante située dans le deuxième revêtement diélectrique est entourée des deux côtés par des couches à base de nitrure du silicium et/ou d'aluminium.

Ces modes de réalisation correspondent aux empilement suivants :
- Di1a/A1/Di1b/F1/Di2a/A2/Di2b/F2/Di3,
- Di1/F1/Di2a/A1/Di2b/F2/Di3a/A2Di3b.

Dans l'empilement Di1a/A1/Di1b/F1/Di2a/A2/Di2b/F2/Di3 ou dans l'empilement Di1/F1/Di2a/A1/Di2b/F2/Di3a/A2/Di3b, la partie sous la couche absorbante du deuxième revêtement diélectrique (Di2a) a de préférence, une épaisseur optique inférieure à l'épaisseur optique de la partie du revêtement diélectrique (Di2b) situé sur la couche absorbante.

De manière avantageuse, les couches absorbantes sont de nature nitrurée ou métallique. De manière avantageuse, les couches absorbantes (A1 et/ou A2) sont soit de nature métallique, soit de nature nitrurée, oxydée ou oxynitrurée. En particulier, les couches absorbantes peuvent être choisies parmi les couches à base de l'un des matériaux suivant : NbN, TiN, NiCrN, SnZnN, ZrN, Ti, NiCr, Nb, Zr ou leur mélange. Cette liste est juste indicative car d'autres natures d'absorbeur pourraient convenir à la présente invention. La nature de l'absorbeur est choisie en fonction des caractéristiques esthétiques, de la disponibilité du matériau, des performances énergétiques, de la durabilité, des contraintes du matériel de dépôt, etc.

L'épaisseur des couches absorbantes doit être adaptée en particulier en fonction de la nature plus ou moins absorbante du matériau choisi. Il est donc judicieux de multiplier la valeur de l'épaisseur géométrique par une valeur indicative de la nature absorbante du matériau. De même qu'on peut définir l'épaisseur optique d'une couche à partir du produit de son épaisseur géométrique par son indice optique (réel) n, on peut définir une « épaisseur d'absorption » par l'épaisseur géométrique multiplié par k/n, n étant la partie réelle de l'indice optique et k, la partie imaginaire de l'indice optique.

De manière particulière, l'épaisseur d'absorption (épaisseur géométrique X k/n) de l'ensemble des deux couches absorbantes (A1 et A2) est comprise entre 0,6 et 25 nm, de préférence comprise entre 0,8 et 15 nm et de manière encore préférée comprise entre 1 et 12 nm ; l'épaisseur d'absorption doit être calculée en prenant en compte l'ensemble des couches absorbantes de l'empilement. Toutefois, les couches de blocages, directement en contact avec les couches fonctionnelles métalliques, vu leur très faible épaisseur, ne sont pas considérées comme des couches absorbantes.

Avantageusement, le rapport entre l'épaisseur d'absorption (épaisseur géométrique X k/n) de la première couche absorbante sur l'épaisseur d'absorption de la deuxième couche absorbante (A1 / A2) est compris entre 0,5 et 5,0 de manière préférée entre 0,7 et 4,0 et de manière encore préférée entre 0.9 et 2,5.

De manière conventionnelle, les caractéristiques lumineuses sont mesurées selon l'illuminant D65 à 2° perpendiculairement au matériau sauf indications contraires.

Le substrat de l'invention présente une transmission lumineuse (TL) est inférieure à 60 % de préférence inférieure à 50 %. Ces valeurs de transmission lumineuses sont mesurées directement sur le substrat seul sans qu'il soit configuré en vitrage multiple ou feuilleté.

Dans la suite de la présente demande, toutes les performances énergétiques et esthétiques du substrat revêtu selon l'invention sont mesurées dans une configuration :
Extér. / Verre clair de 6 mm d'épaisseur / empilement / espace de 15 mm 90%Ar / verre clair de 6 mm d'épaisseur / Intér.

D'une manière particulière, la transmission lumineuse (TL) du substrat revêtu, dans la configuration de vitrage donnée, est comprise entre 25 et 45%, de préférence est comprise entre 30 et 40%.

D'une manière particulière, le facteur solaire (g) du substrat revêtu, dans la configuration de vitrage donnée, est comprise entre 15 et 30 %, de manière préférée entre 17 et 26%.

D'une manière particulière, la sélectivité (s) du substrat revêtu, dans la configuration donnée, est supérieure à 1,4, de manière préférée supérieure à 1,5 et de manière encore préférée supérieure à 1,6.

D'une manière particulière, la réflexion lumineuse du côté extérieur du vitrage (RLₑₓₜ), dans la configuration donnée, est inférieure à 20%, de préférence inférieure à 18%, et de manière encore préférée inférieure à 15%.

D'une manière particulière, dans une configuration « Extér. / Verre clair de 6 mm d'épaisseur / empilement / espace de 15 mm 90%Ar / verre clair de 6 mm d'épaisseur / Intér. », les indices colorimétriques a* et b* du système de mesure Cielab, La*b*,
- mesurés en transmission, à incidence normale, sont compris entre -12 et 2, et/ou - mesurés en réflexion, côté extérieur, à incidence normale, sont compris entre -12 et 2, de préférence compris entre -10 et 1, d'une manière encore préférée entre -7 et 0,
- mesurés en réflexion, côté extérieur, à un angle d'incidence de 60° par rapport à la normale, sont compris entre -10 et 2.

Pour éviter un reflet extérieur verdâtre, l'indice a* et de préférence supérieur à l'indice b* en réflexion, côté extérieur.

L'indice colorimétrique a* du système de mesure La*b*, mesuré en réflexion, côté extérieur, à incidence normale, peut notamment être compris entre -7 et 2. L'indice colorimétrique b* du système de mesure La*b*, mesuré en réflexion, côté extérieur, à incidence normale, peut être compris entre -10 et 0.

Lorsque l'angle d'incidence de l'observateur est de 45°, voire de 60° par rapport à la normale, il est souhaitable que les indices colorimétriques a* et b* ne varient pas de manière trop importante par rapport aux indices mesurés à incidence normale.

Les couches métalliques fonctionnel à base d'argent sont en argent ou à base d'alliage métallique contenant de l'argent

De manière avantageuse, le revêtement comporte une couche de blocage (OB), de préférence métallique, déposée sur au moins une des deux couches fonctionnelles métalliques (F). Le revêtement peut comporter une couche métallique de blocage (OB) déposée sur chaque couche fonctionnelle métalliques (F).

De manière avantageuse, le revêtement comporte une couche de blocage (UB), de préférence métallique, déposée sous au moins une des deux couches fonctionnelles métalliques (F). Le revêtement peut comporter une couche de blocage (UB), de préférence métallique déposée sous chaque couche fonctionnelle métallique (F).

Les couches de blocage sont choisies parmi les couches métalliques à base d'un métal ou d'un alliage métallique, les couches de nitrure métallique, les couches d'oxyde métallique et les couches d'oxynitrure métallique d'un ou plusieurs éléments choisis parmi le titane, le nickel, le chrome, le tantale et le niobium telles que Ti, TiN, TiOx, Nb, NbN, Ni, NiN, Cr, CrN, NiCr, NiCrN. Les couches métalliques de blocage sont fde préférence choisies parmi les couches à base de Ti, NiCr. Elles ont généralement une épaisseur de l'ordre de 0,3 à 3 nm ou 0,3 à 2 nm.

Les couches de blocage sont au contact des couches fonctionnelles métalliques (F).

Dans un mode particulier, les revêtements diélectriques (Di) comportent une couche en matériau diélectrique à base de nitrure (par exemple Si₃N₄) et une couche en matériau diélectrique à base d'oxyde (par exemple de ZnO, SnZnO ou ZnO:Al), la couche à base de nitrure étant en contact avec la couche absorbante. La couche diélectrique à base de nitrure est de préférence choisie parmi les couches à base de nitrure du silicium et/ou d'aluminium.

L'épaisseur optique des revêtements diélectriques est généralement comprise entre 15 nm et 200 nm. Si les revêtements diélectriques comportent plusieurs couches diélectriques successives, les épaisseurs sont calculées pour l'ensemble des couches diélectriques formant le revêtement diélectrique.

Lorsque le deuxième revêtement diélectrique comporte une couche absorbante, la partie sous la couche absorbante a de préférence une épaisseur optique inférieure à l'épaisseur optique de la partie sur la couche absorbante. En particulier, le rapport Di2b/Di2a est compris entre 1,5 et 6, de manière préférée entre 1,8 et 5.

En particulier, l'épaisseur optique de la partie sous la couche absorbante, du deuxième revêtement diélectrique est comprise entre 15 et 120 nm, de préférence entre 25 et 100 nm. Et la partie au-dessus de la couche absorbante a une épaisseur optique comprise entre 80 et 200 nm, de préférence comprise entre 100 et 165 nm.

Pour les valeurs d'épaisseur données, on tient compte de l'ensemble des couches de matériau diélectrique comprises entre les deux couches fonctionnelles métalliques, l'épaisseur de la couche absorbante par contre n'est pas prise en compte pour calculer l'épaisseur optique du revêtement diélectrique.

Suivant un mode de réalisation particulier, il est possible de prévoir une fine couche métallique de blocage (UB) sous au moins une des deux couches fonctionnelles métalliques. Ces couches de blocage ont généralement de l'ordre de 0.3 à 2 nm.

L'empilement peut aussi comporter une couche supérieure de protection. La couche supérieure de protection est de préférence la dernière couche de l'empilement, c'est-à-dire la couche la plus éloignée du substrat revêtu de l'empilement. Ces couches supérieures de protection ne sont pas considérées comme comprises dans le dernier revêtement diélectrique (Di3).

Ces couches ont en général une épaisseur comprise entre 2 et 10 nm, de préférence entre 2 et 5 nm.

La couche de protection peut être choisie parmi une couche de titane, de zirconium, d'hafnium, de zinc et/ou d'étain ; ce ou ces métaux étant sous forme métallique, oxydée, ou nitrurée. Avantageusement, la couche de protection est une couche d'oxyde de titane, une couche d'oxyde de zinc et d'étain ou une couche à base d'oxyde de titane et de zirconium.

L'invention concerne en outre l'utilisation d'un substrat revêtu comme décrit ci-dessus, pour réaliser un double vitrage.

De préférence, l'empilement selon l'invention est positionné en face 2 du vitrage, c'est-à-dire, sur la face intérieure du substrat extérieur, de manière à former une structure de type : verre / empilement de couches minces / espace/ verre.

Chaque substrat peut être clair ou coloré. Un des substrats au moins notamment peut être en verre coloré dans la masse. Le choix du type de coloration va dépendre du niveau de transmission lumineuse et/ou de l'aspect colorimétrique recherchés pour le vitrage une fois sa fabrication achevée.

Les substrats des vitrages selon l'invention sont aptes à subir un traitement thermique. Ils sont donc éventuellement bombés et/ou trempés.

Les exemples non limitatifs suivants permettent d'illustrer les détails et caractéristiques avantageuses de l'invention.

### Exemples

### Exemple 1

Le tableau 1 ci-après illustre les épaisseurs géométriques en nanomètres de chacune des couches des empilements réalisés pour les exemples comparatifs (C1 à C4) et selon l'invention (Ex 1a à 1h). Les empilements réalisés visent une TL de l'ordre de 30 %.

L'exemple comparatif C1, est similaire aux empilements selon l'invention mais ne comporte pas de couche absorbante.

Les exemples comparatifs C2, C3 et C4 comportent une seule couche absorbante, respectivement dans le 1^{er}, 2^{e} et 3^{e} revêtement diélectrique.

Différentes natures de couche absorbante ont été choisies : Dans les exemples C1 à C4 et a, b et c, les deux couches absorbantes sont en NbN (k=1,8 ; n=3,5). Dans l'exemple d, les couches absorbantes sont en NiCrN (k=3,3 ; n=3,1) ; dans l'exemple e, en Ti (k=2,7 ; n=3,1) ; dans l'exemple f, en TiN (k=1,6 ; n=1,8) ; dans l'exemple g, en Nb (k=1,4 ; n=4,4) ; dans l'exemple h, en SnZnN (k=1,9 ; n=3,3).

**[Table 1]**

| Ex1 | Stack (nm) | C1 | C2 | C3 | C4 | 1a | 1b | 1e | 1d | 1e | 1f | 1g | 1h |
|---|---|---|---|---|---|---|---|---|---|---|---|---|---|
| | TiO₂ | 3 | 3 | 3 | 3 | 3 | 3 | 3 | 3 | 3 | 3 | 3 | 3 |
| Di3 | SiN | 21 | 35 | 29 | 17 | 27 | 22 | 22 | 28 | 30 | 29 | 30 | 32 |
| | Absorbing | 0 | 0 | 0 | 5,4 | 0 | 3,3 | 2,5 | 0 | 0 | 0 | 0 | 0 |
| | ZnO | 5 | 5 | 5 | 5 | 5 | 5 | 5 | 5 | 5 | 5 | 5 | 5 |
| OB2 | NiCr | 1,5 | 2 | 1,5 | 0,5 | 0,5 | 0,5 | 0,5 | 1,7 | 1,9 | 1,2 | 1,9 | 2 |
| F2 | Ag | 8 | 8,4 | 10,2 | 8 | 10,9 | 13,3 | 10,4 | 11,3 | 10,4 | 11,7 | 10,4 | 11,2 |
| UB2 | NiCr | 3 | 2,5 | 0,5 | 1 | 3 | 1,5 | 0,5 | 0,3 | 0,9 | 0,5 | 0,9 | 0,8 |
| Di2 | ZnO | 5 | 5 | 5 | 5 | 5 | 5 | 5 | 5 | 5 | 5 | 5 | 5 |
| | SnZnO | 15 | 15 | 15 | 15 | 15 | 15 | 15 | 35 | 31 | 27 | 31 | 33 |
| | SiN | 32 | 39 | 26 | 30 | 44 | 44 | 37 | 28 | 16 | 24 | 16 | 28 |
| | Absorbing | 0 | 0 | 3,7 | 0 | 3 | 0 | 5,1 | 2,6 | 2,2 | 7,7 | 2,2 | 2,9 |
| | SiN | 33 | 33 | 37 | 25 | 16 | 22 | 14 | 22 | 22 | 32 | 22 | 16 |
| | ZnO | 5 | 5 | 5 | 5 | 5 | 5 | 5 | 5 | 5 | 5 | 5 | 5 |
| OB1 | NiCr | 2,5 | 2,5 | 2,5 | 2,5 | 1,5 | 2,5 | 0,3 | 1,1 | 1,8 | 1,5 | 1,8 | 0,3 |
| F1 | Ag | 12,3 | 11,1 | 8 | 12,1 | 11,7 | 8,9 | 10,7 | 8,3 | 12,0 | 8 | 12,0 | 14 |
| UB1 | NiCr | 2 | 1,5 | 2 | 0,5 | 0,5 | 0,5 | 2 | 0,3 | 1,5 | 1,0 | 1,5 | 1,3 |
| Di1 | ZnO | 5 | 5 | 5 | 5 | 5 | 5 | 5 | 5 | 5 | 5 | 5 | 5 |
| | Absorbing | 0 | 4,5 | 0 | 0 | 3 | 4,5 | 0 | 3,2 | 1,5 | 5,5 | 1,5 | 3,1 |
| | SiN | 27 | 15 | 42 | 58 | 41 | 38 | 39 | 46 | 36 | 40 | 36 | 33 |

Le tableau 2 ci-après résume les principales caractéristiques optiques et énergétiques obtenues dans une configuration :
Extér. / Verre clair de 6 mm d'épaisseur / empilement / espace de 15 mm 90%Ar / verre clair de 6 mm d'épaisseur / Intér.

**[Table 2]**

| Ex1 | Configuration 6mm Indian PLX/15mm 90Ag/6mm Indian PLX | | | | | | | | | | | | |
|---|---|---|---|---|---|---|---|---|---|---|---|---|---|
| | S | g | TL | a* t | b* t | Rc | a*c | b*c | Rg | a*g | b*g | a*60 | b*60 |
| C1 | 1,54 | 19,5 | 30,1 | -5 | -7 | 26 | -18 | -12 | 21 | -6 | -4 | 2 | -13 |
| C2 | 1,59 | 19,5 | 31,1 | -10 | -2 | 18,5 | -8 | -6 | 17 | -3 | -3 | -5 | -3 |
| C3 | 1,44 | 19,5 | 28 | -5 | -2 | 15 | -2 | 3 | 18 | 1 | -6 | -3 | -8 |
| C4 | 1,43 | 19,6 | 28 | -4 | -6 | 26 | -18 | -15 | 18,5 | 5 | -2 | 7 | -2 |
| 1a | 1,59 | 18,2 | 29 | -5 | 0 | 12 | -4 | -1 | 13 | -1 | -4 | -2,5 | -6 |
| 1b | 1,63 | 19,5 | 31 | -10 | -2 | 18 | -10 | -6 | 9 | -3,5 | -6 | -4,5 | -7 |
| 1c | 1,44 | 19,5 | 28 | -4 | 0 | 13 | -3 | 4 | 16 | 0 | -4 | 1 | -7 |
| 1d | 1,48 | 19,3 | 28,5 | -4 | -1 | 12,3 | -2 | -4 | 12,7 | -0,6 | -5,5 | -3,5 | -6,5 |
| 1e | 1,5 | 19,3 | 29 | -4 | -1 | 12 | -2 | -4 | 13 | -0,5 | -5,1 | -3,5 | -6,5 |
| 1f | 1,66 | 19,3 | 32 | -6 | -1 | 12 | -5,8 | -4 | 12,9 | -0,5 | -4,2 | -2 | -6,5 |
| 1g | 1,6 | 19,5 | 30,8 | -5,4 | -1 | 12 | -2,1 | -1,3 | 13 | -0,6 | -3,6 | -0,6 | -6,1 |
| 1h | 1,53 | 19,5 | 29,8 | -4 | -1 | 12,1 | -2 | -4 | 13 | -0,5 | -5,5 | -3,3 | -5,9 |

### Exemple 2

Le tableau 3 ci-après illustre les épaisseurs géométriques en nanomètres de chacune des couches des empilements réalisés pour les exemples comparatifs (C1 à C4) et selon l'invention (Ex 2a à 2h). Les empilements réalisés visent une TL de l'ordre de 40 %.

L'exemple comparatif C1, est similaire aux empilements selon l'invention mais ne comporte pas de couche absorbante.

Les exemples comparatifs C2, C3 et C4 comportent une seule couche absorbante, respectivement dans le 1^{er}, 2^{e} et 3^{e} revêtement diélectrique.

Différentes natures de couche absorbante ont été choisies : Dans les exemples C1 à C4 et a, b et c, les deux couches absorbantes sont en NbN (k=1,8 ; n=3,5). Dans l'exemple d, les couches absorbantes sont en NiCrN (k=3,3 ; n=3,1) ; dans l'exemple e, en Ti (k=2,7 ; n=3,1) ; dans l'exemple f, en TiN (k=1,6 ; n=1,8) ; dans l'exemple g, en Nb (k=1,4 ; n=4,4) ; dans l'exemple h, en SnZnN (k=1,9 ; n=3,3).

**[Table 3]**

| Ex2 | Stack (nm) | C1 | C2 | c3 | C4 | 2a | 2b | 2c | 2d | 2e | 2f | 2g | 2h |
|---|---|---|---|---|---|---|---|---|---|---|---|---|---|
| | TiO₂ | 3 | 3 | 3 | 3 | 3 | 3 | 3 | 3 | 3 | 3 | 3 | 3 |
| Di3 | SiN | 33 | 35 | 31 | 16 | 31 | 25 | 28 | 28 | 27 | 31 | 29 | 33 |
| | NbN | 0 | 0 | 0 | 3,5 | 0 | 3,2 | 1 | 0 | 0 | 0 | 0 | 0 |
| | ZnO | 5 | 5 | 5 | 5 | 5 | 5 | 5 | 5 | 5 | 5 | 5 | 5 |
| OB2 | NiCr | 0,8 | 1 | 0,5 | 0,5 | 0,5 | 0,5 | 0,5 | 1,3 | 1,4 | 0,9 | 1,1 | 1,9 |
| F2 | Ag | 12 | 11,1 | 9,8 | 10,1 | 11,6 | 13,5 | 10,1 | 11,7 | 10,9 | 12,1 | 10,9 | 11,9 |
| UB2 | NiCr | 0,5 | 0,5 | 0,5 | 0,5 | 0,6 | 0,5 | 0,5 | 0,3 | 0,3 | 0,3 | 0,6 | 0,3 |
| Di2 | ZnO | 5 | 5 | 5 | 5 | 5 | 5 | 5 | 5 | 5 | 5 | 5 | 5 |
| | SnZnO | 15 | 15 | 15 | 15 | 15 | 15 | 15 | 34 | 34 | 34 | 34 | 35 |
| | SiN | 38 | 40 | 43 | 31 | 48 | 46 | 45 | 23 | 27 | 22 | 30 | 15 |
| | NbN | 0 | 0 | 4,5 | 0 | 2,5 | 0 | 4,5 | 1,4 | 1,5 | 4,6 | 2,0 | 1,5 |
| | SiN | 30 | 26 | 10 | 27 | 14 | 20 | 10 | 26 | 11 | 23 | 10 | 27 |
| | ZnO | 5 | 5 | 5 | 5 | 5 | 5 | 5 | 5 | 5 | 5 | 5 | 5 |
| OB1 | NiCr | 2,3 | 0,9 | 0,6 | 1,1 | 0,8 | 0,3 | 0,4 | 0,3 | 1,4 | 1,0 | 1,8 | 0,8 |
| f1 | Ag | 12,5 | 13,1 | 8,6 | 8 | 13,1 | 9,6 | 10,5 | 8 | 10,3 | 9,7 | 9,2 | 14,0 |
| UB1 | NiCr | 2 | 0,5 | 2 | 1,6 | 0,5 | 0,5 | 0,9 | 0,3 | 1,1 | 0,7 | 1,2 | 0,3 |
| Di1 | ZnO | 5 | 5 | 5 | 5 | 5 | 5 | 5 | 5 | 5 | 5 | 5 | 5 |
| | NbN | 0 | 5 | 0 | 0 | 2,5 | 3,8 | 0 | 3,0 | 3,1 | 4,7 | 2,4 | 2,6 |
| | SiN | 31 | 15 | 45 | 33 | 36 | 35 | 40 | 46 | 43 | 36 | 43 | 25 |

Le tableau 4 ci-après résume les principales caractéristiques optiques et énergétiques obtenues dans la même configuration :
Extér. / Verre clair de 6 mm d'épaisseur / empilement / 15 mm d'épaisseur 90% Ar / verre clair de 6 mm d'épaisseur / Intér.

**[Table 4]**

| Ex2 | Configuration 6mm Indian PLX/15mm 90Ag/6mm Indian PLX | | | | | | | | | | | | |
|---|---|---|---|---|---|---|---|---|---|---|---|---|---|
| | S | g | TL | a* t | b* t | Rc | a*c | b*c | Rg | a*g | b*g | a*60 | b*60 |
| C1 | 1,67 | 25,2 | 42 | -8 | -2 | 16,8 | -12 | -8 | 20 | 2 | -8 | -6 | -7 |
| C2 | 1,62 | 26 | 42 | -9 | -1,5 | 13,5 | -5 | -7 | 12 | -1,5 | -4,5 | -5 | -4 |
| C3 | 1,48 | 26 | 38,5 | -5 | 0 | 10 | -2 | 0 | 15 | 0 | -3,5 | -2 | -6 |
| C4 | 1,48 | 26 | 38,5 | -8 | -3 | 10 | -10 | -8 | 8 | -5 | -2 | 2 | -8 |
| 2a | 1,61 | 24,9 | 40 | -5,5 | 0 | 10 | -4 | -2 | 11 | -1 | -4 | -2,5 | -5,5 |
| 2b | 1,58 | 26 | 41 | -8 | 0 | 14 | -10 | 3 | 10 | -3 | -3 | -3,5 | -5 |
| 2c | 1,51 | 25,5 | 38,5 | -5 | 0 | 10 | -3 | 3 | 14 | 1 | -3 | -1,5 | -8 |
| 2d | 1,5 | 25,7 | 38,5 | -3,5 | -1,3 | 12,7 | -2 | -5 | 10,2 | 0 | -5 | -3,7 | -6,6 |
| 2e | 1,59 | 25,5 | 40,5 | -5 | 0 | 12 | -2 | -5 | 10 | -0,5 | -3,9 | -3,1 | -5,6 |
| 2f | 1,68 | 25 | 42 | -5 | -1 | 11,7 | -5 | -5 | 13 | -0,5 | -3,5 | -3,5 | -6,3 |
| 2g | 1,58 | 25 | 39,6 | -4,3 | 0,7 | 11,1 | -2,1 | -5 | 10 | -0,5 | -5,3 | -3,5 | -6,5 |
| 2h | 1,6 | 24 | 38,5 | -4 | -1 | 12 | -2,6 | -5 | 13 | -0,5 | -5,5 | -3,1 | -6,5 |

En conclusion, on peut voir que les exemples selon l'invention permettent de réaliser des doubles vitrages avec une transmission lumineuse de l'ordre de 30% et 40% tout en combinant des faibles facteurs solaires (g inférieur ou égal à 26% lorsque la TL est de l'ordre de 40% et g inférieur à 20% lorsque la TL est de 30%) et de faibles réflexions lumineuses (RLₑₓₜ inférieure à 20%), et tout en fournissant une esthétique souhaitée.

Les exemples comparatifs ne permettent pas de combiner tous les critères souhaités.

Ce qui est particulièrement remarquable c'est que la couleur en réflexion côté extérieur a pu être maintenue dans les zones neutres, ce qui n'est pas le cas des exemples comparatifs. On peut constater en outre, que
- dans l'exemple 1, la couleur en transmission est trop verdâtre dans l'exemple comparatif V2 et la couleur en réflexion extérieure est rougeâtre dans l'exemple comparatif V4.
- dans l'exemple 2, V4, l'indice a* est inférieur à l'indice b*, ce qui donne une nuance trop verdâtre et la couleur en transmission est trop verdâtre dans les exemples comparatifs V2 et V4.

La stabilité angulaire de la couleur en réflexion extérieure est particulièrement améliorée par rapport aux empilements des exemples comparatifs.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Substrat en polymère ou en matériau rigide minéral revêtu d'un empilement de couches minces formant un revêtement fonctionnel pouvant agir sur le rayonnement solaire et/ou le rayonnement infrarouge, ledit revêtement comprenant deux couches fonctionnelles métalliques (F), chacune disposée entre deux revêtements diélectriques (Di), de manière à comprendre au minimum la succession de couches Di1/F1/Di2/F2/Di3 en partant du substrat, chaque revêtement diélectrique (Di) comportant au moins une couche en matériau diélectrique, **caractérisé en ce que** le revêtement comporte au moins deux couches absorbantes dans le visible (A1, A2), disposées au moins dans deux revêtements diélectriques différents, les couches absorbantes (A1, A2) sont séparées des couches fonctionnelles métalliques (F) par au moins une couche diélectrique, l'épaisseur géométrique de toutes les couches diélectriques séparant chaque couche absorbante d'une couche fonctionnelle métallique (F) est supérieure ou égale à 5 nm,
les couches absorbantes sont choisies parmi les couches à base de l'un des matériaux suivant : NbN, TiN, NiCrN, SnZnN, ZrN, Ti, NiCr, Nb, Zr ou leur mélange.

2. Substrat revêtu selon la revendication 1, **caractérisé en ce qu'**il comporte au moins une couche absorbante dans le premier revêtement diélectrique (Di1).

3. Substrat revêtu selon l'une quelconque des revendications précédentes, **caractérisé en ce qu'**il comporte au moins une couche absorbante dans le deuxième revêtement diélectrique (Di2).

4. Substrat revêtu selon la revendication 3, **caractérisé en ce que** la couche absorbante située dans le deuxième revêtement diélectrique (Di2) est entourée des deux côtés et au contact de couches en matériau diélectrique choisies parmi les couche à base de nitrure du silicium et/ou d'aluminium.

5. Substrat revêtu selon l'une quelconque des revendications précédentes, **caractérisé en ce que** une couche absorbante (A1) est disposée dans le premier revêtement diélectrique (Di1) et une deuxième couche absorbante (A2) est disposée dans le deuxième revêtement diélectrique (Di2), chaque couche absorbante étant séparée de chaque couche fonctionnelle métallique (F1 et F2) par au moins une couche en matériau diélectrique.

6. Substrat revêtu selon la revendication 5, **caractérisé en ce que** dans l'empilement Di1a/A1/Di1b/F1/Di2a/A2/Di2b/F2/Di3, la partie sous la couche absorbante du deuxième revêtement diélectrique (Di2a) a une épaisseur optique inférieure à l'épaisseur optique de la partie du revêtement diélectrique (Di2b) situé sur la couche absorbante.

7. Substrat revêtu selon l'une quelconque des revendications précédentes, **caractérisé en ce que** les couches absorbantes (A1, A2) sont de nature métallique ou nitrurée.

8. Substrat revêtu selon l'une quelconque des revendications précédentes, **caractérisé en ce qu'**il présente une transmission lumineuse (TL) inférieure à 60 %, de préférence inférieure à 50 %.

9. Substrat revêtu selon l'une quelconque des revendications précédentes, **caractérisé en ce que**, dans une configuration « Extér. / Verre clair de 6 mm d'épaisseur / empilement / espace de 15 mm 90% Ar / verre clair de 6 mm d'épaisseur / Intér. », la transmission lumineuse (TL) est comprise entre 25 et 45%.

10. Substrat revêtu selon l'une quelconque des revendications précédentes, **caractérisé en ce qu'**il présente, dans une configuration « Extér. / Verre clair de 6 mm d'épaisseur / empilement / espace de 15 mm 90% Ar / verre clair de 6 mm d'épaisseur / Intér. » une sélectivité supérieure à 1,4.

11. Substrat revêtu selon l'une quelconque des revendications précédentes, **caractérisé en ce que** la face non revêtue du substrat est destinée à constituer le côté extérieur d'un vitrage, la réflexion lumineuse (RL) côté extérieur, dans une configuration « Extér. / Verre clair de 6 mm d'épaisseur / empilement / espace de 15 mm 90%Ar / verre clair de 6 mm d'épaisseur / Intér. », étant inférieure à 20%.

12. Substrat revêtu selon l'une quelconque des revendications précédentes, **caractérisé en ce que** le revêtement comporte une couche de blocage métallique (OB) déposée sur au moins une des deux couches fonctionnelles métalliques (F).

13. Substrat revêtu selon l'une quelconque des revendications précédentes, **caractérisé en ce que** le revêtement comporte une couche métallique de blocage (UB) déposée sous au moins une des deux couches fonctionnelles métalliques (F).

14. Substrat revêtu selon l'une quelconque des revendications précédentes, **caractérisé en ce que** les revêtements diélectriques (Di) comportent au moins une couche en matériau diélectrique à base de nitrure et au moins une couche en matériau diélectrique à base d'oxyde, la couche à base de nitrure étant en contact avec la couche absorbante.

15. Double vitrage comportant deux substrats transparents, **caractérisé en ce que** le substrat transparent disposé du côté extérieur du vitrage est un substrat selon l'une quelconque des revendications précédentes.

## Patentansprüche

1. Substrat aus Polymer oder aus starrem mineralischem Material, das mit einer Stapelung von Dünnschichten beschichtet ist, die eine funktionelle Beschichtung ausbilden, die auf Sonnenstrahlung und/oder Infrarotstrahlung einwirken kann, die Beschichtung umfassend zwei metallische funktionelle Schichten (F), die jeweils zwischen zwei dielektrischen Beschichtungen (Di) angeordnet sind, so dass sie ausgehend von dem Substrat mindestens die Schichtenfolge Di1/F1/Di2/F2/Di3 umfassen, wobei jede dielektrische Beschichtung (Di) mindestens eine Schicht aus dielektrischem Material aufweist, **dadurch gekennzeichnet, dass** die Beschichtung mindestens zwei in dem sichtbaren Bereich absorbierende Schichten (A1, A2) aufweist, die in mindestens zwei verschiedenen dielektrischen Beschichtungen angeordnet sind, die absorbierenden Schichten (A1, A2) von den metallischen funktionellen Schichten (F) durch mindestens eine dielektrische Schicht getrennt sind, wobei die geometrische Dicke aller dielektrischen Schichten, die jede absorbierende Schicht von einer metallischen funktionellen Schicht (F) trennen, größer als oder gleich 5 nm ist,
wobei die absorbierenden Schichten aus Schichten ausgewählt sind, die auf einem der folgenden Materialien basieren: NbN, TiN, NiCrN, SnZnN, ZrN, Ti, NiCr, Nb, Zr oder ihrer Mischung.

2. Beschichtetes Substrat nach Anspruch 1,
**dadurch gekennzeichnet, dass** es mindestens eine absorbierende Schicht in der ersten dielektrischen Beschichtung (Di1) aufweist.

3. Beschichtetes Substrat nach einem der vorstehenden Ansprüche,
**dadurch gekennzeichnet, dass** es mindestens eine absorbierende Schicht in der zweiten dielektrischen Beschichtung (Di2) aufweist.

4. Beschichtetes Substrat nach Anspruch 3,
**dadurch gekennzeichnet, dass** die absorbierende Schicht, die sich in der zweiten dielektrischen Beschichtung (Di2) befindet, auf beiden Seiten und in Kontakt mit Schichten aus dielektrischem Material umgeben ist, die aus den Schichten auf der Basis von Siliziumnitrid und/oder Aluminium ausgewählt sind.

5. Beschichtetes Substrat nach einem der vorstehenden Ansprüche,
**dadurch gekennzeichnet, dass** eine absorbierende Schicht (A1) in der ersten dielektrischen Beschichtung (Di1) angeordnet ist und eine zweite absorbierende Schicht (A2) in der zweiten dielektrischen Beschichtung (Di2) angeordnet ist, wobei jede absorbierende Schicht von jeder metallischen funktionellen Schicht (F1 und F2) durch mindestens eine Schicht aus dielektrischem Material getrennt ist.

6. Beschichtetes Substrat nach Anspruch 5,
**dadurch gekennzeichnet, dass** in der Stapelung
Di1a/A1/Di1b/F1/Di2a/A2/Di2b/F2/Di3 der Teil unter der absorbierenden Schicht der zweiten dielektrischen Beschichtung (Di2a) eine optische Dicke aufweist, die geringer als die optische Dicke des Teils der dielektrischen Beschichtung (Di2b) ist, der sich auf der absorbierenden Schicht befindet.

7. Beschichtetes Substrat nach einem der vorstehenden Ansprüche,
**dadurch gekennzeichnet, dass** die absorbierenden Schichten (A1, A2) metallischer oder nitrierter Natur sind.

8. Beschichtetes Substrat nach einem der vorstehenden Ansprüche,
**dadurch gekennzeichnet, dass** es eine Lichtdurchlässigkeit (TL) von weniger als 60 %, vorzugsweise weniger als 50 % aufweist.

9. Beschichtetes Substrat nach einem der vorstehenden Ansprüche,
**dadurch gekennzeichnet, dass** in einer Konfiguration "außen / 6 mm dickes Klarglas / Stapelung / Zwischenraum von 15 mm 90 % Ar / 6 mm dickes Klarglas / innen" die Lichtdurchlässigkeit (LT) zwischen 25 und 45 % liegt.

10. Beschichtetes Substrat nach einem der vorstehenden Ansprüche,
**dadurch gekennzeichnet, dass** es in einer Konfiguration "außen / 6 mm dickes Klarglas / Stapelung / Zwischenraum von 15 mm 90 % Ar / 6 mm dickes Klarglas / innen" eine Selektivität von mehr als 1,4 vorweist.

11. Beschichtetes Substrat nach einem der vorstehenden Ansprüche,
**dadurch gekennzeichnet, dass** die unbeschichtete Fläche des Substrats dazu bestimmt ist, die Außenseite einer Verglasung auszubilden, wobei die Lichtreflexion (RL) an der Außenseite in einer Konfiguration "außen / 6 mm dickes Klarglas / Stapelung / Zwischenraum von 15 mm 90 % Ar / 6 mm dickes Klarglas / innen" weniger als 20 % beträgt.

12. Beschichtetes Substrat nach einem der vorstehenden Ansprüche,
**dadurch gekennzeichnet, dass** die Beschichtung eine metallische Sperrschicht (OB) aufweist, die auf mindestens eine der zwei metallischen funktionellen Schichten (F) aufgebracht ist.

13. Beschichtetes Substrat nach einem der vorstehenden Ansprüche,
**dadurch gekennzeichnet, dass** die Beschichtung eine metallische Sperrschicht (UB) aufweist, die unter mindestens einer der zwei metallischen funktionellen Schichten (F) aufgebracht ist.

14. Beschichtetes Substrat nach einem der vorstehenden Ansprüche,
**dadurch gekennzeichnet, dass** die dielektrischen Beschichtungen (Di) mindestens eine Schicht aus dielektrischen Material auf Nitridbasis und mindestens eine Schicht aus dielektrischen Material auf Oxidbasis umfassen, wobei die Schicht auf Nitridbasis in Kontakt mit der absorbierenden Schicht ist.

15. Doppelverglasung, die zwei transparente Substrate aufweist,
**dadurch gekennzeichnet, dass** das transparente Substrat, das auf der Außenseite der Verglasung angeordnet ist, ein Substrat nach einem der vorstehenden Ansprüche ist.

## Claims

1. A polymeric or rigid mineral material substrate coated with a stack of thin layers forming a functional coating which can act on solar radiation and/or infrared radiation, said coating comprising two metallic functional layers (F), each disposed between two dielectric coatings (Di), so as to comprise at least the sequence of layers Di1/F1/Di2/F2/Di3 starting from the substrate, each dielectric coating (Di) comprising at least one layer of dielectric material, **characterized in that** the coating comprises at least two layers which absorb in the visible region (A1, A2), disposed at least in two different dielectric coatings, the absorbent layers (A1, A2) are separated from the metallic functional layers (F) by at least one dielectric layer, the geometric thickness of all the dielectric layers separating each absorbent layer from a metallic functional layer (F) is greater than or equal to 5 nm, the absorbent layers are chosen from layers based on one of the following materials: NbN, TiN, NiCrN, SnZnN, ZrN, Ti, NiCr, Nb, Zr or a mixture thereof.

2. The coated substrate according to claim 1, **characterized in that** it comprises at least one absorbent layer in the first dielectric coating (Di1).

3. The coated substrate according to any one of the preceding claims, **characterized in that** it comprises at least one absorbent layer in the second dielectric coating (Di2).

4. The coated substrate according to claim 3, **characterized in that** the absorbent layer located in the second dielectric coating (Di2) is surrounded on both sides and in contact with layers of dielectric material chosen from silicon and/or aluminum nitride based layers.

5. The coated substrate according to any one of the preceding claims, **characterized in that** an absorbent layer (A1) is disposed in the first dielectric coating (Di1) and a second absorbent layer (A2) is disposed in the second dielectric coating (Di2), each absorbent layer being separated from each metallic functional layer (F1 and F2) by at least one layer of dielectric material.

6. The coated substrate according to claim 5, **characterized in that** in the stack Di1a/A1/Di1b/F1/Di2a/A2/Di2b/F2/Di3, the part under the absorbent layer of the second dielectric coating (Di2a) has an optical thickness that is less than the optical thickness of the part of the dielectric coating (Di2b) located on the absorbent layer.

7. The coated substrate according to any one of the preceding claims, **characterized in that** the absorbent layers (A1, A2) are of a metallic or nitrided nature.

8. The coated substrate according to any one of the preceding claims, **characterized in that** it exhibits a light transmission (LT) of less than 60%, preferably less than 50%.

9. The coated substrate according to any one of the preceding claims, **characterized in that**, in an "Outside / 6-mm-thick clear glass / stack / 15-mm 90% Ar gap / 6-mm-thick clear glass / Inside" configuration, the light transmission (LT) is comprised between 25 and 45%.

10. The coated substrate according to any one of the preceding claims, **characterized in that** it exhibits, in an "Outside / 6-mm-thick clear glass / stack / 15-mm 90% Ar gap / 6-mm-thick clear glass / Inside" configuration, a selectivity greater than 1.4.

11. The coated substrate according to any one of the preceding claims, **characterized in that** the uncoated face of the substrate is intended to form the outside of a glazing, the light reflection (LR) on the outside, in an "Outside / 6-mm-thick clear glass / stack / 15-mm 90% Ar gap / 6-mm-thick clear glass / Inside" configuration, being less than 20%.

12. The coated substrate according to any one of the preceding claims, **characterized in that** the coating comprises a metallic blocking layer (OB) deposited on at least one of the two metallic functional layers (F).

13. The coated substrate according to any one of the preceding claims, **characterized in that** the coating comprises a blocking metallic layer (UB) deposited under at least one of the two metallic functional layers (F).

14. The coated substrate according to any one of the preceding claims, **characterized in that** the dielectric coatings (Di) comprise at least one layer of nitride-based dielectric material and at least one layer of oxide-based dielectric material, the nitride-based layer being in contact with the absorbent layer.

15. A double glazing comprising two transparent substrates, **characterized in that** the transparent substrate disposed on the outside of the glazing is a substrate according to any one of the preceding claims.
